# EUROPÄISCHE PATENTSCHRIFT

(11) **EP 2 160 284 B1**
(45) Veröffentlichungstag und Bekanntmachung des Hinweises auf die Patenterteilung: **07.08.2013**
(21) Anmeldenummer: 07764810.3
(22) Anmeldetag: 25.06.2007
(51) Int. Cl.: B29C 65/08, B65B 7/02, B65B 51/22

(54) **VERFAHREN UND VORRICHTUNG ZUM VERSCHWEISSEN VON VENTILSÄCKEN**
METHOD AND APPARATUS FOR THE WELDING OF VALVE BAGS
PROCÉDÉ ET DISPOSITIF DE SOUDAGE DE SACS À VALVE

(43) Veröffentlichungstag der Anmeldung: 10.03.2010
(73) Patentinhaber: Haver & Boecker oHG, 59302 Oelde (DE)
(72) Erfinder: VOLLENKEMPER, Wilhelm, 59302 Oelde-Stromberg (DE); PAGENKEMPER, Bernhard, 33378 Rheda-Wiedenbrück (DE); STÖVESAND, Bernhard, 59320 Ennigerloh (DE)
(74) Vertreter: Schütte, Hartmut
(86) Internationale Anmeldenummer: PCT/EP2007/005572
(87) Internationale Veröffentlichungsnummer: WO 2009/000288

(56) Entgegenhaltungen:
- EP-A- 1 466 829
- EP-A- 1 800 837
- DE-C1- 4 219 785
- GB-A- 2 062 538
- JP-A- 57 195 617
- JP-A- 58 154 478
- JP-A- 60 155 433
- US-A- 3 242 029

## Beschreibung

Die Erfindung betrifft eine Vorrichtung und ein Verfahren, bei der ein Verschweißen von werkstücken und insbesondere von Säcken erfolgt. Vorzugsweise werden Ventilsäcke mit einem Schüttgut gefüllt und anschließend wird das Sackventil verschweißt, um ungewünschten Materialaustritt zu verhindern. Mit der Erfindung können z. B. mit thermoplastischen Materialien beschichtete Säcke verarbeitet werden. Bei einem bevorzugten Anwendungsfall erfolgt das Verschweißen von aus Papier oder Folie bestehenden oder mit Folien beschichteten Säcken, insbesondere Ventilsäcken, nach dem Abfüllen von schüttfähigen Gütern, wie z. B. Baustoffen, Granulaten, chemischen Produkten etc. Es können auch Gewebesäcke eingesetzt werden. Möglich ist auch der Einsatz von Säcken, bei denen der Ventilbereich beschichtet ist.

Es sind im Stand der Technik unterschiedliche Füllmaschinen bekannt geworden, bei denen nach dem Befüllen der Säcke die Säcke verschlossen werden. Dabei sind Verfahren und Vorrichtungen bekannt geworden, die über ineinander eingreifende Rändelscheiben die Lagen z.B. eines Sackventils miteinander verpressen, sodass eine Verzahnung der Lagen des Sackventils erfolgt. Eine solche Verbindung schützt vor unbemerkter Entnahme von abgefülltem Material, stellt aber keinen staub- und rieseldichten Verschluss des Sackventils dar. Sichere und zuverlässige Verbindungen werden durch ein Verschweißen der Sacklagen erzielt. Als besonderes zuverlässig und sicher hat sich das Verschließen über ein Ultraschallschweißverfahren herausgestellt. Dabei werden die Folienlagen der beschichteten Ventile der Ventilsäcke in einer Ultraschallschweißeinrichtung miteinander verschweißt, so dass die Säcke dicht und zuverlässig verschlossen werden. Bekannte Ultraschallschweißeinrichtungen umfassen eine Sonotrode und einen Amboss, die sich über die Breite des Sackventils erstrecken und mittels derer die gesamte Breite des Ventils auf einmal verschweißt wird. Das Verfahren funktioniert bei feststehenden zu verschweißenden Werkstücken zuverlässig.

Mit der JP 58154478 A ist eine Ultraschallschweißeinrichtung zum Verschweißer von Kunststoffmaterialien bekannt geworden, wobei die Sonotrode sich bei der Verschweißung um ihre Schwingungsachse dreht.

Die US 3,242,029 offenbart eine Ultraschallschweißeinrichtung zum Verschweißen von Kunststoffmaterialien. Die Sonotrode ist drehbar um ihre Schwingungsachse gelagert vorgesehen. Auch der Amboss ist drehbar an der insgesamt feststehenden Ultraschallschweißeinrichtung vorgesehen. Die zu verschweißenden Folienlagen werden durch die Ultraschallschweißeinrichtung durchgezogen, wobei die Folien miteinander verschweißt werden.

Die JP 5719 5617 A zeigt eine Ultraschallverschweißung von thermoplastischen Kunststoffmaterialien, wobei die Sonotrode um ihre Schwingungsachse drehbar ist. Auch der mit einer Außenverzahnung versehene Amboss ist drehbar an der stationären Ultraschallschweißeinrichtung aufgenommen.

Mit der GB 2 062 538 A ist eine Ultraschallschweißeinrichtung bekannt geworden, bei der an der Ultraschallschweißeinrichtung eine um ihre Schwingungsachse rotierbare Sonotrode mit einem rotierbaren Amboss zur Verschweißung von Kunststofffolien zusammenwirkt.

Aus der JP 60155433 A ist eine Ultraschallschweißeinrichtung bekanntgeworden, bei der die Sonotrode ebenfalls um ihre Schwingungsachse rotiert und mit einem rotierbaren Amboss zusammenwirkt.

Bei Füllanlagen werden oft rotierende Maschinen mit mehreren Füllstutzen eingesetzt, bei denen nur eine Ultraschallschweißeinrichtung für die Verschweißung der Säcke der bis zu 8, 12 oder 16 Füllstutzen vorgesehen ist. Dadurch, dass nur eine Ultraschallschweißeinrichtung für die verschiedenen Säcke vorgesehen wird, kann ein erheblicher Aufwand eingespart werden. Nachteilig ist aber, dass bei einer ortsfesten Ultraschallschweißeinrichtung eine Relativgeschwindigkeit zwischen den zu verschweißenden werkstücken und der Sonotrode und dem Amboss vorherrscht, wodurch die Sonotrode einem erheblich höheren Verschleiß aufgrund der Reibung zwischen Sack und Sonotrode unterliegt. Außerdem können sich auf der Außenseite des Ventils Produktpartikel absetzen, die z. B. im Falle von Baustoffen, wie Zement oder Sand zu einer erheblichen Reibung zwischen Sonotrode und Sack führen könnten, die zu einem erhöhten Verschleiß der Sonotrode führt. Da die Sonotroden meist aus einem hochwertigem Werkstoff bestehen und präzise gefertigt werden, führt ein erhöhter Sonotrodenverschleiss zu erheblichen Mehrkosten.

Als Lösung dafür ist es mit der EP 1 010 619 A vorgeschlagen worden, unter Verwendung einer einzigen gemeinsamen Ultraschallschweißeinrichtung, die Ultraschallschweißeinrichtung einen Winkelabschnitt beim Verschweißvorgang synchron mit dem zugehörigen Füllstutzen mitdrehen zu lassen und anschließend wieder zurück zu fahren, um dann die Ultraschallschweißeinrichtung beim Verschweißen des nächsten Sacks wieder einen Glinkelabschnitt synchron mit rotieren zu lassen. Dadurch wird eine Relativbewegung zwischen den zu verschweißenden Werkstücken und der Ultraschallschweißeinrichtung beim Schweißvorgang vermieden. Das Verfahren und die Vorrichtung hat sich als zuverlässig heraus gestellt, erfordern aber ein entsprechendes Gestänge und einen entsprechenden Antrieb, um die Ultraschallschweißeinrichtung in und gegen die Drehrichtung der Füllanlage zu verfahren.

Mit der EP 1 466 829 A1 ist eine weitere Anlage zum Füllen von Ventilsäcken bekannt geworden, bei der zum Verschweißen der Ventilsäcke ein Ultraschallschweißverfahren eingesetzt wird. Die Ultraschallschweißeinrichtung nach der EP 1 466 829 A1 ist ortsfest ausgeführt, so dass beim Verschweißen eine Relativbewegung zwischen Ultraschallschweißeinrichtung und den zu verschweißenden Säcken vorliegt. Dabei ist der Amboss als rotierend antreibbares Ambossrad ausgebildet und auf einer ortsfesten, rotierend antreibbaren Welle drehfest aufgesetzt. Obwohl das Ambossrad rotierend antreibbar ist, tritt bei dieser Ausgestaltung eine Relativbewegung zwischen einer Oberfläche der zu verschweißenden Werkstücke und der Sonotrode auf, so dass der Verschleiß der Sonotrode nicht vermindert wird.

In einer weiteren Ausgestaltung nach der EP 1 466 829 A1 ist auch die Sonotrode rotierbar vorgesehen. Dabei sind die Drehachsen von Sonotrode und Ambossrad parallel zueinander ausgerichtet. Die Schwingungsrichtung der Sonotrode ist parallel zur Ebene der zu verschweißenden Werkstücke und parallel zur Drehachse der Sonotrode. Die Hauptschwingungsachse zeigt an dem Amboss vorbei. Die Sonotrode schlägt nicht gegen den Amboss, sondern reibt an ihm. Nachteilig an dieser Ausgestaltung ist, dass die übertragbare Leistung zum Verschweißen nur gering ist. Eine zuverlässige Verschweißung kann deshalb nur bei geringer Durchsatzleistung gewährleistet werden.

Es ist deshalb die Aufgabe der vorliegenden Erfindung, eine weitere Vorrichtung und ein weiteres Verfahren mit einer Ultraschallschweißeinrichtung zur Verfügung zu stellen, bei der bzw. bei dem eine effektive Verschweißung der zu verschweißenden Ventilsäcke auch bei einer Relativbewegung zwischen Ventilsack und Ultraschallschweißeinrichtung möglich ist.

Diese Aufgabe wird gelöst durch eine Vorrichtung mit den Merkmalen des Anspruchs 1 und durch ein Verfahren mit den Merkmalen des Anspruchs 11. Bevorzugte Weiterbildungen sind Gegenstand der Unteransprüche.

Die erfindungsgemäße Vorrichtung nach Anspruch 1 umfasst eine Packmaschine für Ventilsäcke und eine Austrageeinrichtung und eine Ultraschallschweißeinrichtung zum Verschweißen von Ventilsäcken. Die Ultraschallschweißeinrichtung umfasst wenigstens einen Konverter, wenigstens eine Sonotrode und wenigstens einen Amboss. Die Sonotrode ist derart angeordnet, dass die Sonotrode zum Verschweißen in Richtung des Ambosses schwingt. Dabei ist die Sonotrode um eine Achse drehbar gelagert, die wenigstens im Wesentlichen parallel zur Schwingungsrichtung angeordnet ist, so dass sie sich bei der Relativbewegung von dem zu verschweißenden Ventilsack und der Ultraschallschweißeinrichtung während des Verschweißens dreht. Die Austrageeinrichtung umfasst wenigstens ein Austrageband, mittels derer die gefüllten Säcke abtransportiert werden. Die Ultraschallschweißeinrichtung ist an der Austrageeinrichtung bewegbar vorgesehen, um die Ventile der Ventilsäcke zu verschweißen. Die Bewegung der Ultraschallschweißeinrichtung ist zur Horizonzalen geneigt.

Die Erfindung hat erhebliche Vorteile. Mit der Erfindung wird eine effektive und zuverlässige Verschweißung von sich bewegenden Werkstücken ermöglicht, bei denen beim Schweißvorgang eine Relativbewegung zur Ultraschallschweißeinrichtung vorliegt. Die Schwingung der Sonotrode in Richtung des Ambosses stellt eine effektive Kraftübertragung sicher.

Ein erheblicher Vorteil ist, dass der Verschleiß der Sonotrode verringert wird. Es wird die auftretende Reibung zwischen Sonotrode und Amboss reduziert, da sich die Sonotrode mit etwa der gleichen Umfangsgeschwindigkeit mitdreht und deshalb keine oder nur eine geringe Relativgeschwindigkeit im Schweißnahtbereich zwischen der Sonotrode und dem Sack vorherrscht.

Außerdem wird erfindungsgemäß die zur Verfügung stehende Kontaktfläche erhöht. Die Fläche, die verschleißen muss, bevor eine Sonotrode ausgetauscht werden muss, wird erheblich von dem kleinen Kontaktbereich im Stand der Technik auf den Umfangsring vergrößert. Der zum Schweißen verwendete Bereich ist in jedem Moment zwar auf einen kleinen Flächenabschnitt begrenzt, aber durch Verschleiß beansprucht wird ein Ring auf der Sonotrodenoberfläche.

Durch die Erfindung wird auch eine Faltenbildung in den Folienlagen verringert. Im Stand der Technik kann es bei einer Relativbewegung von Sonotrode und zu verschweißendem Werkstück zur Faltenbildung kommen, wenn z. B. eine doppelte Folienlage an der überlappenden Stelle in die Schweißeinrichtung eintritt, die bei einer gleitenden Sonotrode durch ein Festklemmen zu Unregelmäßigkeiten im Schweißverhalten führen kann.

Im Stand der Technik kann es durch ein durch Faltenbildung zusätzlich lokal noch dickeres Material beim Schweißen auch zu einer lokal schwächeren Schweißnaht kommen, da die Schweißenergie nicht auf die lokale Materialdicke angepasst ist. Solche Fälle werden durch die Erfindung erheblich reduziert, da durch die Drehung der Sonotrode um eine Achse parallel zur Schwingungsachse weitgehend solche Störungen beim Verschweißen verhindert werden, wie sie z. B. durch Faltenwurf hervorgerufen wird.

Ein weiterer Vorteil ist, dass durch die rotierende Sonotrode der Transport des Werkstücks durch die Schweißeinrichtung gewährleistet wird.

Die Vorrichtung umfasst eine Packmaschine für Ventilsäcke.

Die Packmaschine ist insbesondere zum Abfüllen von schüttfähigen Gütern geeignet und vorgesehen, z. B. zum Abfüllen von Baustoffen, wie insbesondere Zement. Auch andere schüttfähige oder pulverförmige Güter oder Granulate können mit einer solchen Anlage abgefüllt werden. Die zu verschweißenden Werkstücke sind Ventilsäcke. Bei Ventilsäcken sind insbesondere die Ventilbereiche mit thermoplastischen Folien versehen.

Die Ultraschallschweißeinrichtung ist vorzugsweise gegenüber einer Drehebene der Packmaschine im wesentlichen ortsfest angeordnet. Das bedeutet, dass die Ultraschallschweißeinrichtung sich nicht mit der Packmaschine mitdreht, sondern immer im Wesentlichen an der gleichen Winkelposition verbleibt. Die Ultraschallschweißeinrichtung kann höhenverstellbar sein, um z. B. einen bei der ersten Umdrehung der Füllmaschine nicht vollständig gefüllten Sack vorbei drehen zu lassen und erst nach der nächsten Umdrehung zu verschweißen.

Die Vorrichtung umfasst eine Austrageeinrichtung mit wenigstens einer insbesondere als Austrageband ausgebildeten

Austrageeinheit, mittels derer die gefüllten Säcke abtransportierbar sind.

Die gefüllten Säcke werden vorzugsweise automatisch maschinell von dem Füllstutzen abgenommen und auf der Austrageeinrichtung positioniert, mittels derer sie abtransportiert werden. Eine manuelle Sackabnahme bzw. Positionierung auf der Austrageeinrichtung ist auch möglich.

Die Ultraschallschweißeinrichtung oder wenigstens eine Ultraschallschweißeinrichtung ist an der Austrageeinrichtung vorgesehen, um Ventile der Ventilsäcke mit dem Ultraschallschweißverfahren zu verschweißen.

Grundsätzlich sind im Stand der Technik schon Packmaschinen bekannt geworden, die an einer Austrageeinrichtung das Sackventil verschließen. So offenbart die DE 88 04 435 U1 eine solche Packmaschine, bei der mittels Heißluft die Ventilinnenfläche im Bereich des Sackventils aktiviert und verschweißt wird. Nachteilig daran ist die erforderliche thermische Aufheizung, die mehr Zeit benötigt, sodass der mögliche Durchsatz begrenzt ist.

Demgegenüber bietet eine Ultraschallschweißeinrichtung an der Austrageeinrichtung den Vorteil einer höheren Kapazität. Außerdem wird ein staub- und rieseldichter Verschluss erzielt. Weiterhin ist es durch die Anordnung an der Austrageeinrichtung möglich, mit nur einer einzigen Ultraschallschweißeinrichtung die Sackventile der mit einer Packmaschine gefüllten Säcke zu verschweißen. Dadurch können erhebliche Kosten eingespart werden, da gegebenenfalls nur eine oder zwei Ultraschallschweißeinrichtungen für eine Packmaschine vorgesehen werden müssen, die zwei, drei, vier oder mehr, wie Z.B. sechs, acht, zehn, zwölf oder sechzehn Füllstutzen aufweist, wodurch eine entsprechende Anzahl an Sonotroden eingespart werden kann.

Grundsätzlich kann die Ultraschallschweißeinrichtung ortsfest an der Austrageeinrichtung vorgesehen sein. Das ist z.B. dann möglich, wenn dic Säcke stehend auf dem Austrageband positioniert und abtransportiert werden, insbesondere wenn die Sackventile zu einer Längsseite der Austrageeinrichtung ausgerichtet sind. Denn dann kann das Sackventil an der stationären Ultraschallschweißeinrichtung vorbei bewegt werden, sodass das Sackventil zwischen Sonotrode und Amboss durchgeführt wird, während dort der Schweißvorgang stattfindet

Erfindungsgemäß ist die Ultraschallschweißeinzichtung an der Austrageeinrichtung bewegbar vorgesehen. Dabei ist es möglich, dass die Ultraschallschweißeinrichtung einen bewegbaren Schweißträger aufweist, an dem die Sonotrode und der Amboss gemeinsam bewegbar vorgesehen sind, um bei dem Schweißvorgang in Transportrichtung der Austrageeinrichtung mitbewegt zu werden.

In diesem Fall ist es bevorzugt, dass eine Geschwindigkeit der Ultraschalischweißeinrichting bzw. des Schweißträgers in Längsrichtung der Austrageeinrichtung gleich der Vortriebsgeschwindigkeit des Austragebandes ist, sodass in Längsrichtung des Austragebandes eine synchrone Bewegung zwischen Ultraschallschweißeinrichtung und einem auf der Austrageeinrichtung transportierten Sack erzielbar ist.

Beim Verschweißen findet gleichzeitig eine Bewegung der Ultraschallschweißeinrichtung bzw. des Schweißträgers in vertikaler Richtung statt.

Während der vertikalen Bewegung der Ultraschallschweißeinrichtung wird ein auf dem Austrageband liegender Sack, dessen Sackventil zur einen Längsseite ausgerichtet ist, verschweißt. Bei dem Schweißvorgang wird das Sackventil durch die Ultraschallschweißeinrichtung durchgeführt, sodass die Sonotrode und der Amboss des Sackventils während der kombinierten horizontalen und vertikalen Bewegung verschweißen.

Der Winkel der Bewegungsrichtung der Ultraschallschweißeinrichtung zur Horizontalen beträgt insbesondere zwischen 25° und 75°. Dabei bewegt sich bei einem Winkel von 25° zur Horizontalen die Ultraschallschweißeinrichtung in vertikaler Richtung erheblich langsamer als in der horizontalen Längsrichtung des Austragebandes und bei einem Winkel von 75° ist die Geschwindigkeit in vertikaler Richtung größer als die Geschwindigkeit in Längsrichtung des Austragebandes. Der Winkel wird folglich in Abhängigkeit von den gewünschten Schweißbedingungen gewählt und kann in bevorzugten Weiterbildungen einstellbar sein. Wenn z.B. eine intensivere Schweißung benötigt wird, wird ein flacherer Winkel gewählt, sodass die Schweißzeit verlängert wird.

In allen Ausgestaltungen und Weiterbildungen der Erfindung ist es besonders bevorzugt, dass der Amboss drehbar angeordnet ist. Der Amboss kann als Ambossrad ausgebildet sein und auf einer rotierbar gelagerten Welle abgestützt sein. Die Ambosswelle kann antreibbar sein. Vorzugsweise wird die Drehung der Ambosswelle an die Vorschubgeschwindigkeit der zu verschweißenden Werkstücke angepasst.

Ein erheblicher Vorteil einer am Austrageband vorgesehenen Ultraschallverschließeinrichtung ist die Möglichkeit der Nachrüstung bestehender Anlagen, bei denen nur das Austrageband ersetzt oder um eine entsprechende Schweißeinrichtung ergänzt werden muss. Ein weiterer großer Vorteil ist, dass die Leistung der Packmaschinen durch die Verschließeinheit nicht vermindert wird. Im Gegensatz dazu wird bei einer an einer rotierenden Packmaschine vorgesehenen Ultraschallverschließeinheit ein Winkelabschnitt zum Verschweißen des Sackes benötigt, wodurch der Gesamtdurchsatz abnimmt, da nicht der gesamte Umfang zur Abfüllung verwendet werden kann. Eine separat am Austrageband angeordnete Ultraschallschweißeinrichtung beeinträchtigt die Leistungsfähigkeit der Anlage hingegen nicht, da der gesamte Umfang zum Abfüllen eingesetzt werden kann.

In allen Ausgestaltungen ist die Sonotrode wenigstens im Kontaktbereich rotationssymmetrisch geformt und insbesondere radial ausgedehnt. Der Kontaktbereich ist vorzugsweise an der Spitze angeordnet. Die Spitze kann z. B. einen Durchmesser von etwa 40 bis 50 mm aufweisen, während der vom Kontaktpunkt weiter entfernte Bereich der Sonotrode einen erheblich größeren Curchmesser von z. B. 70 bis 80 mm aufweist.

Insbesondere ist ein Kontaktpunkt zwischen Sonotrode und Amboss an einem Punkt auf der Sonotrode, der radial von der zentralen Symmetrieachse beabstandet ist. Der Kontaktpunkt ist insbesondere in einem Randbereich der Sonotrodenspitze. Dadurch beschreiben die Kontaktpunkte nacheinander einen Kontaktkreis am Sonotrodenende, der um die Drehachse herum angeordnet ist.

Durch die Drehung der Sonotrode wird die Relativgeschwindigkeit zwischen Ultraschallschweißeinrichtung und Werkstück ausgeglichen. Die Drehgeschwindigkeit der Sonotrode wird deshalb an die Vorschubgeschwindigkeit derart angepasst, dass die Umfangsgeschwindigkeit des Kontaktpunktes der Vorschubgeschwindigkeit des Werkstückes entspricht. Im Falle einer rotierenden Füllanlage wird die Umfangsgeschwindigkeit des Sonotrodenkontaktpunkts an die Umfangsgeschwindigkeit des zu verschweißenden Sacks angepasst.

In bevorzugten Weiterbildungen kann die Sonotrode an der Spitze einen radial umlaufenden Ring oder Wulst aufweisen, der den Kontakt mit dem Amboss über das zu verschweißende Werkstück herstellt. Dadurch kann der Kontakt mit dem Werkstück auf den Ring beschränkt werden.

Die Drehachse steht in allen Fällen insbesondere senkrecht zur Vorschubrichtung der zu verschweißenden Werkstücke. In bestimmten bevorzugten Weiterbildungen steht die Drehachse der Sonotrode senkrecht zur Vorschubrichtung der zu verschweißenden WerkstücKe und gleichzeitig unter einem Winkel zur Drehachse des Ambosses. Das bedeutet, dass die Sonotrode in einer Richtung nicht mehr senkrecht zum Amboss ausgerichtet ist, sondern dazu geneigt ist. Gleichzeitig ist aber eine Tangente an den Umfang der Sonotrode parallel zu der Transportrichtung der Folie ausgerichtet.

Der Winkel zwischen der Drehachse der Sonotrode und der Drehachse des Ambosses beträgt insbesondere wenigstens 30°, vorzugsweise 45° oder wenigstens 60°. Bei weiter senkrecht zueinander ausgerichteten Drehachsen ist die Kraftübertragung von der Sonotrode auf das Werkstück besser- Der Faktor ist proportional zu dem Kosinus des Winkels, so dass bei einem Winkel von etwa 30° ca. 50% übertragen werden und bei einem Winkel von 60° schon weit über 80 %. Vorzugsweise ist in diesen Ausgestaltungen die Sonotrodenspitze kegelförmig oder hohlkegelförmig oder kegelstumpfförmig ausgestaltet, wobei der Winkel des Kegels am den Winkel zwischen den beiden Drehachsen angepasst ist, um einen guten Kontakt zwischen Sonotrode, Werkstück und Amboss zu gewährleisten.

Vorzugsweise ist die Sonotrode an einem Schwingungsknoten drehbar gelagert. Zur Signalerzeugung ist vorzugsweise ein Generator vorgesehen.

In allen Fällen kann die Sonotrode wenigstens teilweise aus Titan bestehen. Die Sonotrode kann eine Beschichtung zur Erhöhung der Oberflächenhärte aufweisen.

Bei dem erfindungsgemäßen Verfahren werden Ventilsäcke verschweißt, wobei eine Packmaschine für Ventilsäcke und eine Austrageeinrichtung und eine Ultraschallschweißeinrichtung vorgesehen sind, wobei die Austrageeinrichtung wenigstens ein Austrageband umfasst, mittels derer die gefüllten Säcke abtransportiert werden, wobei die Ultraschallschweißeinrichtung einen Konverter und wenigstens eine Sonotrode und wenigstens einen Amboss umfasst, wobei mit einem Generator der Ultraschallschweißeinrichtung ein ultraschallschwingungssignal erzeugt wird. Das Ultraschallschwingungssignal wird mittels eines Konverters und einer Sonotrode in eine Ultraschallschwingung umgewandelt. Zum Verschweißen schwingt die Sonotrode in Richtung eines Ambosses und wird dabei um eine Achse gedreht, die wenigstens im Wesentlichen parallel zur Schwingungsrichtung liegt. Die Ultraschallschweißeinrichtung bewegt sich an der Austrageeinrichtung, um die Ventile der Ventilsäcke zu verschweißen. Die Bewegung der Ultraschallschweißeinrichtung ist zur Horizontalen geneigt.

In bevorzugten Ausgestaltungen des Verfahrens wird auch der Amboss bein Verschweißen gedreht. In allen Fällen können vor dem Verschweißen Ventilsäcke gefüllt werden. Das Verfahren kann an einer rotierenden Füllanlage eingesetzt werden, bei der Ventilsäcke gefüllt werden, die nach dem Befüllen verschlossen werden, indem die Öffnungen bzw. Ventile verschweißt werden.

Weitere Vorteile und Anwendungsmöglichkeiten ergeben sich aus dem Ausführungsbeispiel, das nun im Folgenden mit Bezug auf die Figuren beschrieben wird.

Darin zeigen:
- Fig. 1: eine stark schematische Darstellung einer rotierenden Packmaschine,
- Fig. 2: eine stark schematische Darstellung einer ersten Ausgestaltung des Austragebandes der Packmaschine nach Fig. 1 in einer Seitenansicht,

- Fig. 3: eine stark schematische Darstellung einer zweiten Ausgestaltung des Austragebandes der Packmaschine nach Fig. 1 in einer Seitenansicht,
- Fig. 4: eine stark schematische Darstellung der Ultraschallschweißeinrichtung für eine Packmaschine nach der Erfindung in perspektivischer Ansicht,
- Fig. 5a: die Ultraschallschweißeinrichtung nach Fig. 4 in einer Seitenansicht,
- Fig. 5b: die Ultraschalischweißeinrichtung nach Fig. 4 in einer anderen Ausführung in einer Seitenansicht,
- Fig. 6: eine Sonotrode einer zweiten Ausführungsform einer Ultraschallschweißeinrichtung, und
- Fig. 7: eine dritte Ausführungsform einer Ultraschallschweißeinrichtung.

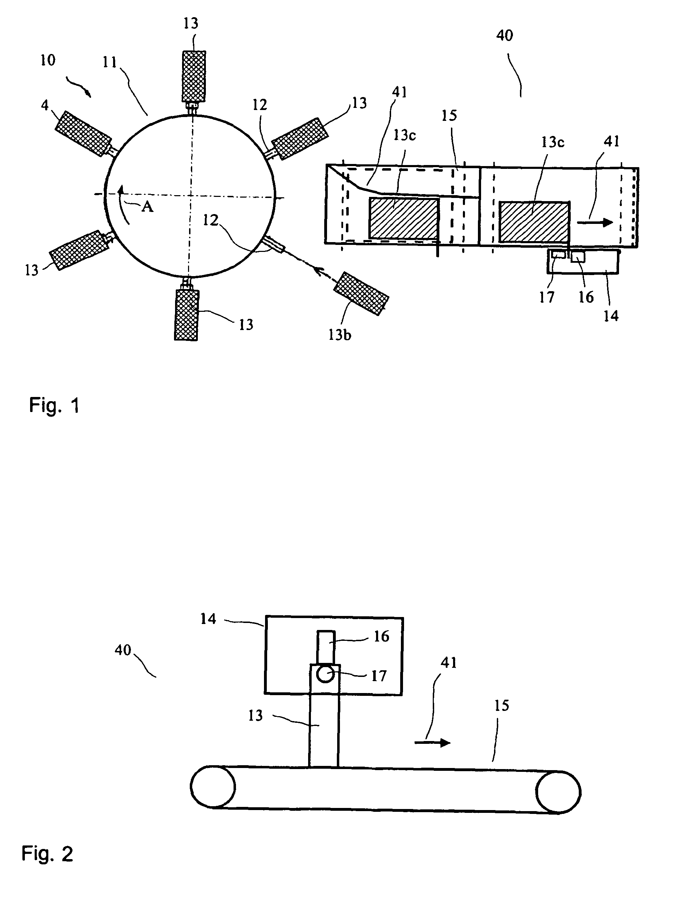

Mit Bezug auf die Figuren 1 bis 5b werden nun Varianten eines ersten Ausführungsbeispiels der Erfindung anhand einer rotierenden Packmaschine 10 beschrieben.

In Fig. 1 ist eine stark schematische Ansicht einer erfindungsgemäßen Packmaschine 10 dargestellt. Die Packmaschine ist drehbar und weist am Rotor 11 hier insgesamt sechs Füllstutzen 12 auf, mit denen gleichzeitig eine entsprechende Anzahl an Säcken 13 befüllt werden können,

Bei der in Fig. 1 dargestellten Packmaschine 10 ist eine Austrageeinrichtung 40 vorgesehen, an der ein Leitgestänge 41 angeordnet ist, um die auf das Austragsband 15 gelangenden Ventilsäcke 13c zu einer Seite des Austragebandes zu bewegen und dort entlang der Längsseite anzuordnen- Dabei ist das Sackventil 13a zu einer Seite des Austragebandes 15 ausgerichtet und ragt über den Rand des Austragebandes hinaus.

Mit dem Austrageband 15 werden die gefüllten und verschweißten Säcke 13c weitertransportiert. An einer weiteren Winkelposition kann ein Aufsteckautomat vorgesehen sein, der die leeren Säcke 13b auf die Füllstutzen 12 der Pack- bzw. Füllmaschine 10 aufsteckt.

Der Füllvorgang beim Füllen der Ventilsäcke 13 wird hier elektronisch gesteuert. Dazu wird mittels einer Bruttowaage das-Füllgewicht des Sacks inkl. des Sackgewichts periodisch gemessen. Wenn das angestrebte Füllgewicht nahezu erreicht wird, wird der Füllstrom verlangsamt und schließlich gestoppt. Der gefüllte Sack 13 kann dann abgenommen werden. Um ein Austreten von Füllmaterial bei der Abnahme und dem weiteren Transport des Sacks 13 zu verhindern, wird das Ventil 13a des Sacks mit der Ultraschallschweißeinrichtung 14 während des Drehens in Drehrichtung A verschweißt.

Ein Ultraschallschweißverfahren ist insbesondere ein Verfahren zum Fügen von Kunststoffen, es können aber auch Metalle geschweißt werden. Wie bei allen anderen Schweißverfahren, muss an der Schweißstelle das Material durch Zuführen von Wärme aufgeschmolzen werden. Beim Ultraschallschweißen wird sie durch eine hochfrequente mechanische Schwingung erzeugt. Die zum Schweißen notwendige Wärme wird zwischen den zu verschweißenden Flächen des Werkstückes durch Molekular- und Grenzflächenreibung in den Flächen des Werkstückes erzeugt. Das Ultraschallschweißen gehört zur Gruppe des Reibschweißens.

Die zum Betrieb benötigte elektrische Leistung wird der Ultraschallschweißeinrichtung 14 über eine Anschlussleitung und einen Generator zugeführt. Der Generator erzeugt aus der Wechselspannung den benötigten hochfrequenten Wechselstrom mit einer Frequenz zwischen etwa 20 und 35 kHz.

Mittels einer piezoelektrischen Einrichtung, dem Konverter, wird das Wechselstromsignal in Schwingungen umgewandelt, die von der Sonotrode 16 aufgenommen und verstärkt werden. Die Schwingungsrichtung 18 liegt parallel zu der Richtung der Rotationsachse 23 der Sonotrode 16, die hier rotationssymmetrisch zur Rotationsachse 23 gestaltet ist. Hier im Ausführungsbeispiel weist die Sonotrode ein Gewicht zwischen etwa 3 kg und 7 kg, insbesondere etwa 5 kg auf. Die genauen Abmessungen und das Gewicht hängen von den konkreten Anforderungen ab.

Bei Verschweißen dreht sich die Sonotrode in Richtung des Pfeils 19 und der Amboss 17 dreht sich in in Richtung des Pfeils 20, während das Sackventil 13a durch die Ultraschallschweißeinrichtung 14 in Vorschubrichtung 21 durchläuft. In der Regel wird eine Doppelschweißnaht hergestellt. Durch die gleichgerichteten Umfangsgeschwindigkeiten der Kontaktpunkte 29 des Ambosses, des Kontaktpunktes 30 der Sonotrode sowie des Sackventils 13a werden Störungen beim Schweißen, wie z. B. durch eine Faltenbildung an den zu verschweißenden Folien vermieden.

Durch die erfindungsgemäße Konstruktion wird der Transport der Ventilsäcke durch die Ultraschallschweißeinrichtung zuverlässig gewährleistet.

Die rotationsymmetrisch ausgebildete Sonotrode weist im Kontaktbereich 22 einen Durchmesser von etwa 40 bis 50 mm auf, während der obere Bereich der Sonotrode einen Durchmesser von 70 bis 80 mm aufweist. Die Rotationsachse 23 der Sonotrode ist seitlich versetzt zur Drehebene des Ambosses 17. Der radiale Abstand 28 hängt von den jeweiligen Bedingungen ab, wird aber relativ groß gewählt, so dass bei mäßigen Drehzahlen der Sonotrode eine vernünftige Umfangsgeschwindigkeit und eine große Kontaktfläche erreicht wird.

Durch die vergrößerte Kontaktfläche wird die Standzeit erheblich verlängert, da nicht bei jeder Schwingung immer wieder die gleiche Stelle beansprucht wird. Der zum Schweißen verwendete Bereich ist in jedem Moment zwar auf einen kleinen Flächenabschnitt begrenzt, aber über der Zeit ergibt sich ein Ring auf der Sonotrodenoberfläche. Der Ring erstreckt sich um die zentrale Symmetrieachse 23 herum.

Die Umfangsgeschwindigkeit der Sonotrode 16 wird vorzugsweise auf die Drehgeschwindigkeit des Sackventils 13a an der Füllanlage 10 eingestellt. Es kann aber auch eine kleinere Umfangsgeschwindigkeit der Sonotrode 16 eingestellt werden, z. B. wenn die Drehzahl der Sonotrode 16 sonst ein zulässiges Maß überschreiten würde. Grundsätzlich ist es auf jeden Fall positiv, wenn die Relativgeschwindigkeit zwischen Sonotrode 16 und Sackventil 13a reduziert wird, selbst wenn noch eine geringe Relativgeschwindigkeit verbleibt.

Bei der Vorrichtung nach Fig. 1 erfolgt die Verschweißung des Sackventils entweder an der Packmaschine oder an dem Austrageband 15.

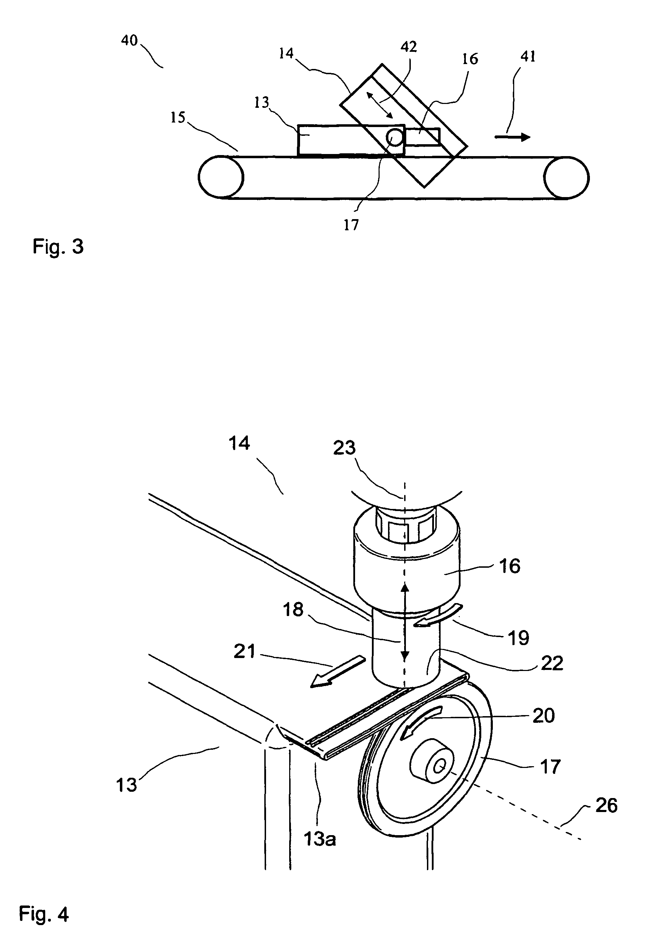

Auf dem Austrageband 15 können die Ventilsäcke entweder liegend oder stehend abtransportiert werden. Wenn die Ventilsäcke beim Transport flach liegen, wie es in Fig. 3 dargestellt ist, erfolgt die Bewegung der Sonotrode und des Ambosses beim Schweißvorgang in senkrechter Richtung.

Wenn hingegen die Säcke 13 stehend auf dem Austrageband 15 angeordnet sind, wie es in Fig. 2 dargestellt ist, so können die Sackventile 13a zwischen der Sonotrode 16 und dem Amboss 17 durchgeführt werden, um während des Vortriebs des Austragebandes 15 die Sackventile 13a der Säcke 13 zu verschweißen. Zum Einfädeln des Sackventils kann ein entsprechender Einlauf vorgesehen sein.

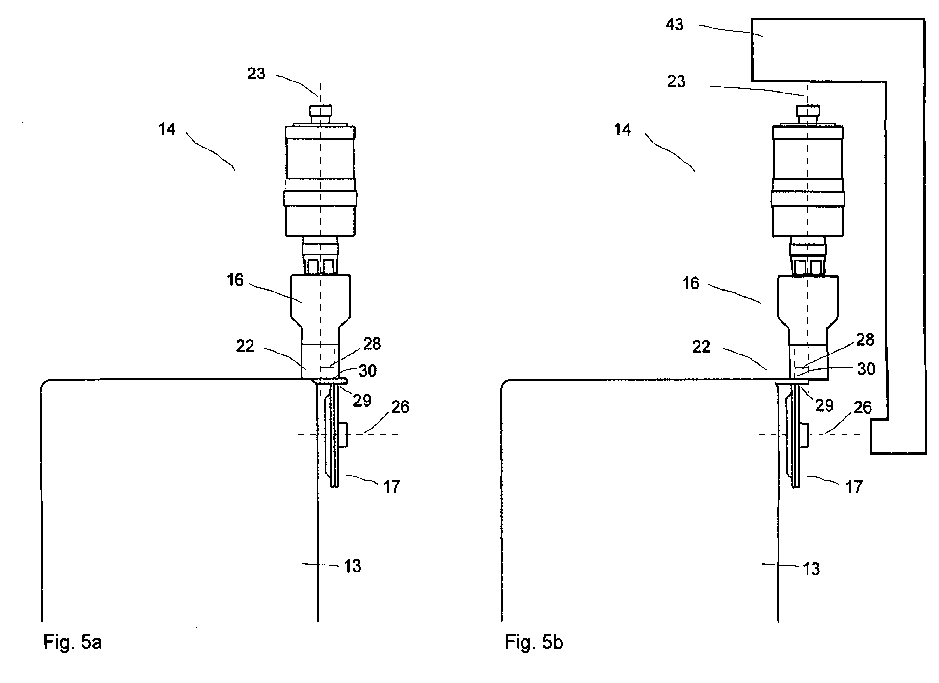

Die Ultraschallschweißeinrichtung 14 ist dabei jeweils ausgebildet, wie es in den Fig. 4 und Fig. 5a oder Fig. 5b dargestellt ist.

In anderen Ausgestaltungen ist die Ultraschallschweißeinrichtung 14 an der Packmaschine vorgesehen, so dass die Säcke bereits verschweißt sind, wenn sie auf das Austrageband 15 gelangen.

Ob die Säcke stehend oder liegend transportiert werden, hängt vom Einzelfall ab. Bei stehend transportierten Säcken werden vorzugsweise zwischen den einzelnen Säcken vertikale Stützeinheiten vorgesehen, um ein Umfallen der Säcke zu verhindern.

Die Sonotrode 16 der Ultraschallschweißeinrichtung kann ihre Rotationsachse entweder näher zur Sackmitte hin ausgerichtet haben als der Kontaktpunkt 30 der Sonotrode, wie es in Fig. 5a dargestellt ist, oder die Mittelachse 23 ist weiter nach außen am Sackventil vorgesehen, wie es in Fig. 5b dargestellt ist. Die Anordnung nach Fig. 5a eignet sich gut zum Einsatz an einer rotierenden Packmaschine. Dort ist der Antrieb der Sonotrode (nicht dargestellt) weiter von der Packmaschine entfernt angeordnet. Die Ausgestaltung nach Fig. 5b ist vorteilhaft zum Einsatz an einem Austrageband, da dort die Rotationsachse weiter weg vom Band angeordnet ist, so dass mehr Platz für den hier nur stark schematisch dargestellten Träger 43 und die weiteren Komponenten verbleibt.

In allen Fällen sind Sensoren vorgesehen, die die einzelnen Säcke und deren Position erkennen.

Bei den weiteren Ausführungsbeispielen sind gleiche Teile und Komponenten mit gleichen Bezugszeichen versehen.

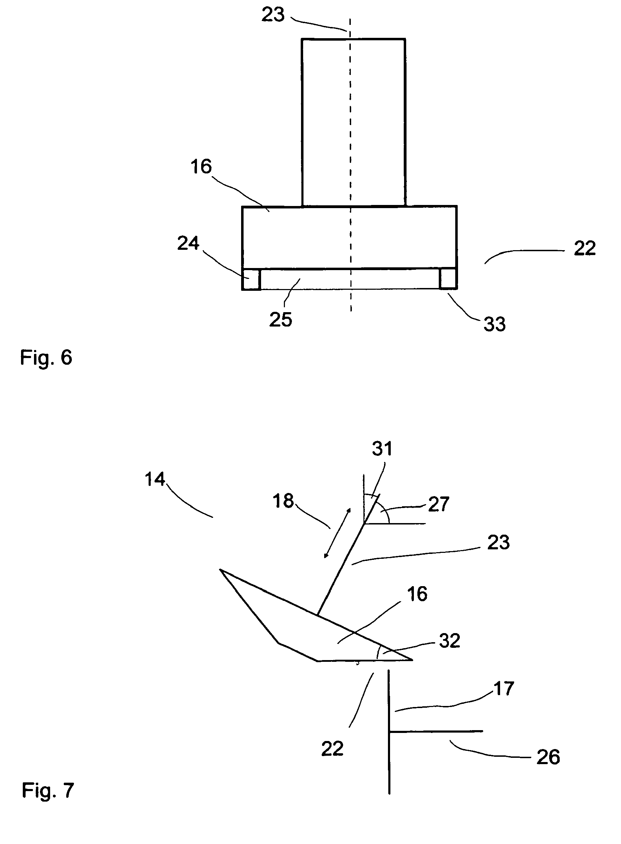

Die in Fig. 6 dargestellte Sonotrode 16 weist eine unterschiedliche Formgebung auf. Der Kontaktbereich 22 weist hier eine gegenüber dem weiter entfernten Bereich radial erheblich vergrößerte Ausdehnung auf. Dadurch steigt die Umfangsgeschwindigkeit in. Kontaktbereich 22 bei gleicher Drehgeschwindigkeit an, so cases kleinere Drehgeschwindigkeiten ausreichen.

Weiterhin ist bei der Sonotrode nach Fig. 6 ein Ring bzw. Kontaktring 24 vorgesehen, der einen Hohlraum 25 umgibt. Die Sonotrode 16 erhält hier nur über den schmalen Ring 24 und den zu verschweißenden Ventilsack 13 Kontakt mit einem Amboss 17, der vorzugsweise entsprechend der Darstellungen in Fig. 4 und 3 ausgebildet ist.

Die Unterseite des Rings 24 bildet die Kontaktfläche 33 der Sonotrode mit dem zu verschweißenden Werkstücks. Ein Austausch der Sonotrode 16 erfolgt, wenn die Sonotrode auf der Verschleiß- bzw. Kontaktfläche 33 verschlissen ist. Die Standzeit wird erhöht, da die ringförmige Kontaktfläche 33 erheblich größer ist, als die Kontaktfläche bei einer feststehenden Sonotrode. Das trifft auch bei den weiteren Ausgestaltungen nach Fig. 1 oder Fig. 7 zu.

Bei dem in Fig. 7 stark schematisch dargestellten Ausführungsbeispiel einer Ultraschallschweißeinrichtung 14 ist die Sonotrode 16 auch drehbar gelagert. Die Rotationsachse 23 ist hier in der Ebene quer zur Transportrichtung des Sackes aber nicht senkrecht zur Drehachse 26 des Ambosses 17 ausgerichtet, wie in den vorherigen Ausführungsbeispielen, sondern weist einen von 90° abweichende Winkel 27 auf. Der Winkel 31 der Abweichung beträgt hier etwa 30°. Der Kontaktbereich 22 der Sonotrode 16 ist kegelstumpförmig gestaltet, wobei der Kegelstumpf einen Winkel 32 aufweist, der dem Winkel 31 der Winkelabweichung entspricht. Das bedeutet, dass der kegelstumpförmige Kontaktbereich 22 der Sonotrode 16 glatt auf dem Amboss bzw. den Ventilsäcken 13 abrollt. Eine Relativbewegung zwischen Sonotrode 16 und Sackventil 13a kann zuverlässig vermieden werden.

Die etwas geringere eingebrachte Schweißleistung, da die Schwingungsrichtung nicht mehr senkrecht auf der zu verschwei-βenden Fläche steht, sondern unter dem Winkel 31 kann demgegenüber oftmals akzeptiert werden.

Die Variante nach Fig. 7 eignet sich besonders, wenn die Ultraschallschweißeinrichtung an dem Austrageband eingesetzt wird. Ein erheblicher Vorteil ist, dass der Antrieb der Sonotrode außerhalb des Transportbereichs des Sackes angeordnet werden kann, wenn die Achse nach außen hin geneigt ist.

### Bezugszeichenliste:

- 10: Füllanlage
- 11: Rotor
- 12: Füllrohr
- 13: Ventilsack
- 13a: Ventil
- 13b: leerer Ventilsack
- 13c: verschweißter Ventilsack
- 14: Ultraschallschweißeinrichtung
- 15: Austrageband
- 16: Sonotrode
- 17: Amboss
- 18: Schwingungsrichtung
- 19: Drehrichtung
- 20: Drehrichtung
- 21: Vorschubrichtung
- 22: Kontaktbereich
- 23: Rotationsachse
- 24: Ring
- 25: Hohlraum
- 26: Drehachse
- 27: Winkel
- 28: radialer Abstand
- 29: Kontaktpunkt
- 30: Kontaktpunkt
- 31: Winkel
- 32: Winkel
- 33: Kontaktfläche
- 40: Austrageeinrichtung
- 41: Transportrichtung
- 42: Bewegungsrichtung
- 43: Träger

## Patentansprüche

1. Vorrichtung (10) mit einer Packmaschine (10) für Ventilsäcke (13) und einer fiustrageeinrichtung (40) und mit einer Ultraschallschweißeinrichtung (14) zum Verschweißen von Ventilsäcken (13), wobei die Ultraschallschweißeinrichtung (14) einen Konverter und wenigstens eine Sonotrode (16) und wenigstens einen Amboss (17) umfasst, wobei die Sonotrode (16) zum Verschweißen in Richtung des Ambosses (17) schwingt und wobei die Sonotrode (16) um eine Achse (23) im Wesentlichen parallel zur Schwingungsrichtung (18) drehbar gelagert ist und sich beim Verschweißen dreht, wobei die Austrageeinrichtung (40) wenigstens ein Austrageband umfasst, mittels derer die gefüllten Ventilsäcke abtransportiert werden,
**dadurch gekennzeichnet,**
**dass** die Ultraschallschweißeinrichtung (14) an der Austrageeinrichtung (40) bewegbar vorgesehen ist, um die Ventile der Ventilsäcke zu verschweißen und dass die Bewegung der Ultraschallschweißeinrichtung (14) zur Horizontalen geneigt ist.

2. Vorrichtung nach Anspruch 1, wobei die Packmaschine (10) mehrere Füllstutzen (12) umfasst, insbesondere wobei die Packmaschine (10) rotierbar ist und die Ultraschallschweißeinrichtung (14) gegenüber einer Drehebene der Packmaschine (10) im wesentlichen ortsfest angeordnet ist.

3. Vorrichtung nach einem der vorhergehenden Ansprüche, wobei eine Geschwindigkeit der Ultraschallschweißeinrichtung (14) in Längsrichtung der Austrageeinrichtung (40) gleich der vortriebsgeschwindigkeit des Austragebandes ist.

4. Vorrichtung nach einem der vorhergehenden Ansprüche, wobei der Winkel der Bewegung der Ultraschallschweißeinrichtung (14) zur Horizontalen zwischen 25 Grad und 75 Grad beträgt.

5. Vorrichtung nach mindestens einem der vorhergehenden Ansprüche, wobei die Ultraschallschweißeinrichtung (14) höhenverstellbar ist.

6. Vorrichtung nach mindestens einem der vorhergehenden Ansprüche, wobei die Sonotrode (16) wenigstens teilweise rotationssymmetrisch geformt und im Kontaktbereich (22) radial ausgedehnt ist und vorzugsweise im Kontaktbereich (22) einen radial umlaufenden Ring (24) oder Wulst aufweist und/oder wobei der Amboss (17) drehbar angeordnet ist.

7. Vorrichtung nach mindestens einem der vorhergehenden Ansprüche, wobei die Drehgeschwindigkeit der Sonotrode (16) an die Vorschubgeschwindigkeit (21) des zu verschweißenden Werkstücks (13) angepasst ist.

8. Vorrichtung nach mindestens einem der vorhergehenden Ansprüche, wobei die Drehachse (23) der Sonotrode (16) unter einem Winkel (32) zur Drehachse (26) des Ambosses (17) steht, wobei der Winkel (27) zwischen der Drehachse (23) der Sonotrode (16) und der Drehachse (26) des Ambosses (17) insbesondere wenigstens 30° beträgt.

9. Vorrichtung nach mindestens einem der vorhergehenden Ansprüche, wobei eine Tangente an den Umfang der Sonotrode (16) parallel zu der Transportrichtung (21) des Werkstücks (13) ausgerichtet ist.

10. Vorrichtung nach mindestens einem der vorhergehenden Ansprüche, wobei die Sonotrode (16) an einem Schwingungsknoten drehbar gelagert ist.

11. Verfahren zum Verschweißen von Ventilsäcken (13), mit einer Packmaschine (10) für Ventilsäcke (13) und einer Austrageeinrichtung (40) und mit einer Ultraschallschweißeinrichtung (14), wobei die Austrageeinrichtung (40) wenigstens ein Austrageband umfasst, mittels derer die gefüllten Ventilsäcke abtransportiert werden, wobei die Ultraschallschweißeinrichtung (14) einen Konverter und wenigstens eine Sonotrode (16) und wenigstens einen Amboss (17) umfasst, wobei ein Ultraschallschwingungssignal mittels eines Konverters und einer Sonotrode (16) einer Ultraschallschweißeinrichtung (14) in eine Ultraschallschwingung umgewandelt wird, wobei die Sonotrode (16) zum Verschweißen in Richtung eines Ambosses (17) schwingt, und sich beim Verschweißen um eine Achse (23) im Wesentlichen parallel zur Schwingungsrichtung (18) dreht,
**dadurch gekennzeichnet,**
**dass** die Ultraschallschweißeinrichtung (14) sich an der Austrageeinrichtung (40) bewegt, um die Ventile der Ventilsäcke zu verschweißen und dass die Bewegung der Ultraschallschweißeinrichtung (14) zur Horizontalen geneigt ist.

12. Verfahren nach dem vorhergehenden Anspruch, wobei sich auch der Amboss (17) beim Verschweißen dreht.

## Claims

1. An apparatus (10) comprising a packing machine (10) for valve bags (13) and a discharging device (40) and having an ultrasonic welding device (14) for welding valve bags (13) wherein the ultrasonic welding device (14) comprises a converter and at least one sonotrode (16) and at least one anvil (17) wherein the sonotrode (16) oscillates in the direction of the anvil (17) for welding and wherein the sonotrode (16) is rotatably supported about an axis (23) substantially parallel to the oscillating direction (18) and rotates during welding, wherein the discharging device (40) comprises at least one discharging belt by means of which the filled bags are conveyed off, **characterized in that** the ultrasonic welding device (14) is provided movable at the discharging device (40) for welding the valves of the valve bags and that the movement of the ultrasonic welding device (14) is horizontally inclined.

2. The apparatus according to claim 1 wherein the packing machine (10) comprises several filling ports (12), in particular wherein the packing machine (10) is rotary and the ultrasonic welding device (14) is arranged substantially stationary relative to a plane of rotation of the packing machine (10).

3. The apparatus according to any of the preceding claims wherein a speed of the ultrasonic welding device (14) in the longitudinal direction of the discharging device (40) equals the advance rate of the discharging belt.

4. The apparatus according to any of the preceding claims wherein the horizontal angle of movement of the ultrasonic welding device (14) is between 25 degrees and 75 degrees.

5. The apparatus according to at least one of the preceding claims wherein the ultrasonic welding device (14) is height-adjustable.

6. The apparatus according to at least one of the preceding claims wherein the sonotrode (16) is formed rotationally symmetrically at least in part and is radially extended in the contact area (22) and preferably comprises a radially circumferential ring (24) or bead in the contact area (22) and/or wherein the anvil (17) is arranged rotatable.

7. The apparatus according to at least one of the preceding claims wherein the rotational speed of the sonotrode (16) is matched to the advance rate (21) of the workpiece to be welded (13).

8. The apparatus according to at least one of the preceding claims wherein the rotational axis (23) of the sonotrode (16) is provided at an angle (32) to the rotational axis (26) of the anvil (17) wherein the angle (27) between the rotational axis (23) of the sonotrode (16) and the rotational axis (26) of the anvil (17) is in particular at least 30°.

9. The apparatus according to at least one of the preceding claims wherein a tangent is aligned with the circumference of the sonotrode (16) parallel to the conveying direction (21) of the workpiece (13).

10. The apparatus according to at least one of the preceding claims wherein the sonotrode (16) is rotatably supported at an oscillation node.

11. A method for welding valve bags (13) with a packing machine (10) for valve bags (13) and a discharging device (40) and having an ultrasonic welding device (14) wherein the discharging device (40) comprises at least one discharging belt by means of which the filled valve bags are conveyed off, wherein the ultrasonic welding device (14) comprises a converter and at least one sonotrode (16) and at least one anvil (17), wherein an ultrasonic oscillation signal is converted into ultrasonic oscillation by means of a converter and a sonotrode (16) of an ultrasonic welding device (14) wherein for welding the sonotrode (16) oscillates in the direction of an anvil (17) and in welding rotates around an axis (23) substantially parallel to the oscillating direction (18), **characterized in that** the ultrasonic welding device (14) moves at the discharging device (40) for welding the valves of the valve bags and that the movement of the ultrasonic welding device (14) is horizontally inclined.

12. The method according to the preceding claim wherein the anvil (17) also rotates during welding.

## Revendications

1. Dispositif (10) muni d'une machine d'emballage (10) pour sacs à valve (13), d'un dispositif d'évacuation (40) et d'un dispositif de soudage par ultrasons (14) pour le soudage de sacs à valve (13), le dispositif de soudage par ultrasons (14) comprenant un convertisseur, au moins une sonotrode (16) et au moins une enclume (17), la sonotrode (16) vibrant en direction de l'enclume (17) pour le soudage et la sonotrode (16) étant montée à rotation autour d'un axe (23) sensiblement parallèle au sens de vibration (18) et tournant lors du soudage, le dispositif d'évacuation (40) incluant au moins une bande d'évacuation au moyen de laquelle sont évacués les sacs à valve remplis, **caractérisé en ce**
**que** le dispositif de soudage par ultrasons (14) est prévu pour être mobile au niveau du dispositif d'évacuation (40) pour souder les valves des sacs à valve, et que le mouvement du dispositif de soudage par ultrasons (14) tend vers l'horizontale.

2. Dispositif selon la revendication 1, la machine d'emballage (10) comprenant plusieurs becs de remplissage (12), la machine d'emballage (10) notamment étant rotative et le dispositif de soudage par ultrasons (14) étant agencé sensiblement fixe par rapport à un niveau rotatif de la machine d'emballage (10).

3. Dispositif selon l'une quelconque des revendications précédentes, une vitesse du dispositif de soudage par ultrasons (14) étant, dans le sens de la longueur du dispositif d'évacuation (40), égale à la vitesse d'avancement de la bande d'évacuation.

4. Dispositif selon l'une quelconque des revendications précédentes, l'angle formé par le mouvement du dispositif de soudage par ultrasons (14) par rapport à l'horizontale étant de 25° à 75°.

5. Dispositif selon au moins l'une quelconque des revendications précédentes, le dispositif de soudage par ultrasons (14) étant réglable en hauteur.

6. Dispositif selon au moins l'une quelconque des revendications précédentes, la sonotrode (16) étant au moins en partie de forme symétrique en rotation et allongée radialement à l'endroit de contact (22), et présentant de préférence à l'endroit de contact (22) un anneau (24) ou un bourrelet en rotation radiale et/ou l'enclume (17) étant agencée à rotation.

7. Dispositif selon au moins l'une quelconque des revendications précédentes, la vitesse de rotation de la sonotrode (16) étant adaptée à la vitesse d'avance (21) de la pièce à souder (13).

8. Dispositif selon au moins l'une quelconque des revendications précédentes, l'axe de rotation (23) de la sonotrode (16) formant un angle (32) avec l'axe de rotation (26) de l'enclume (17), l'angle (27) formé entre l'axe de rotation (23) de la sonotrode (16) et l'axe de rotation (26) de l'enclume (17) mesurant notamment au moins 30°.

9. Dispositif selon au moins l'une quelconque des revendications précédentes, une tangente à la circonférence de la sonotrode (16) étant parallèle au sens d'amenage (21) de la pièce à souder (13).

10. Dispositif selon au moins l'une quelconque des revendications précédentes, la sonotrode (16) étant disposée à rotation au niveau d'un noeud.

11. Dispositif pour le soudage de sacs à valve (13), muni d'une machine d'emballage (10) pour sacs à valve (13), d'un dispositif d'évacuation (40) ainsi que d'un dispositif de soudage par ultrasons (14), le dispositif d'extraction (40) comprenant au moins une bande d'évacuation au moyen de laquelle sont évacués les sacs à valve remplis, le dispositif de soudage par ultrasons (14) comprenant un convertisseur et au moins une sonotrode (16) et au moins une enclume (17), un signal vibratoire émis par ultrasons étant transformé en une vibration par ultrasons au moyen d'un convertisseur et d'une sonotrode (16) d'un dispositif de soudage par ultrasons (14), la sonotrode (16) vibrant en direction d'une enclume (17) pour le soudage et tournant, pendant le soudage, autour d'un axe (23) sensiblement parallèle au sens de vibration (18),
**caractérisé en ce**
**que** le dispositif de soudage par ultrasons (14) se déplace le long du dispositif d'évacuation (40) pour le soudage des valves des sacs à valve, et que le mouvement du dispositif de soudage par ultrasons (14) tend vers l'horizontale.

12. Procédé selon la revendication précédente, l'enclume (17) tournant également pendant le soudage.
